# EUROPÄISCHE PATENTSCHRIFT

(11) **EP 3 805 882 B1**
(45) Veröffentlichungstag und Bekanntmachung des Hinweises auf die Patenterteilung: **08.06.2022**
(21) Anmeldenummer: 19202506.2
(22) Anmeldetag: 10.10.2019
(51) Int. Cl.: G05B 19/409, G05B 23/02

(54) **LEITSYSTEM FÜR EINE TECHNISCHE ANLAGE MIT TRENDKURVENDIAGRAMM**
CONTROL SYSTEM FOR A TECHNICAL INSTALLATION WITH A TREND CURVE DIAGRAM
SYSTÈME DE GUIDAGE POUR UNE INSTALLATION TECHNIQUE POURVU DE DIAGRAMME DE COURBE DE TENDANCE

(43) Veröffentlichungstag der Anmeldung: 14.04.2021
(73) Patentinhaber: Siemens Aktiengesellschaft, 80333 München (DE)
(72) Erfinder: Lutz, Benjamin, 76327 Pfinztal (DE)

(56) Entgegenhaltungen:
- EP-A1- 2 458 464
- EP-A1- 3 528 074
- DE-A1-102018 124 303
- US-A1- 2014 081 430

## Beschreibung

Die Erfindung betrifft ein Leitsystem einer technischen Anlage, welches wenigstens einen Operator Station Server und einen Operator Station Client aufweist, mit den Merkmalen des Anspruchs 1.

Ein Ziel bei der Automatisierung verfahrenstechnischer Anlagen ist es, diese in ihren optimalen Arbeitspunkten zu betreiben. Zur Überprüfung der jeweiligen Arbeitspunkte haben sich so genannte XY-Trends bzw. XY-Trenddiagramme etabliert. Bei diesen XY-Trend-diagrammen werden zwei (verfahrenstechnische) Prozessmesswerte als 2-Tupel mit gleicher Zeitbasis zusammen mit einer Vorlagenkennlinie visualisiert. Bei den zwei Prozessmesswerten kann es sich beispielsweise um den Druck und die Temperatur einer Turbine handeln. Darüber hinaus kann auch der historische Verlauf der 2-Tupel dargestellt werden, um einen Trend des 2-Tupel Arbeitspunktes verfolgen zu können.

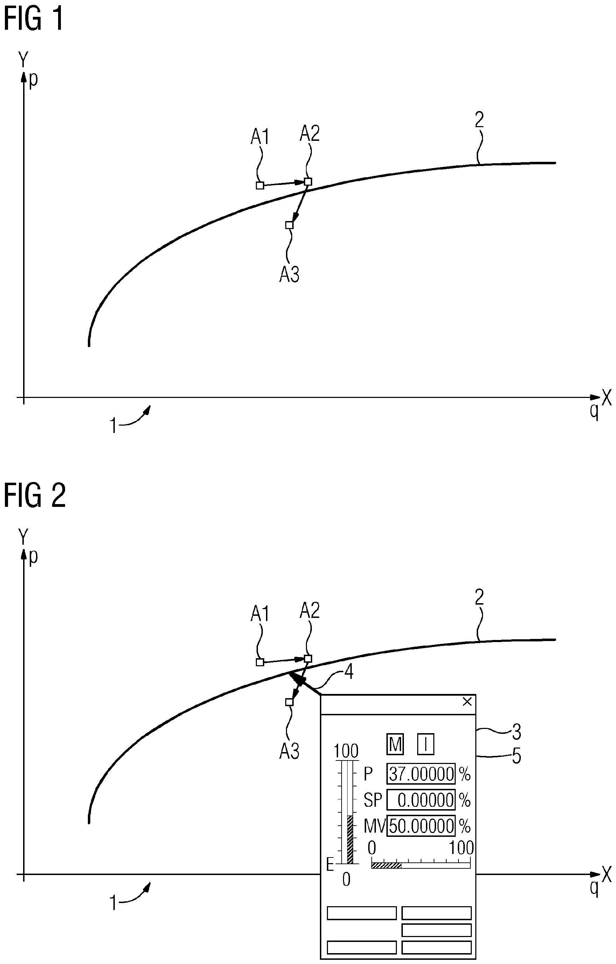

In FIG 1 ist ein beispielhaftes XY-Trenddiagramm 1 mit einem Druck p entlang einer X-Achse und mit einem Durchfluss q entlang einer Y-Achse zur Überprüfung eines optimalen Arbeitspunktes A1, A2, A3 des 2-Tupels Druck/Durchfluss eines Mixers mit einer Vorlagenkennlinie 2 nach dem Stand der Technik dargestellt.

Dargestellt ist in FIG ein historischer Verlauf des Arbeitspunktes A1, A2, A3, was in FIG 1 durch Pfeile zwischen den drei dargestellten Arbeitspunkten A1, A2, A3 visualisiert ist. Der Arbeitspunkt A1, A2, A2 kann von einem Bediener (Operator) der technischen Anlage grafisch innerhalb des XY-Trenddiagramms 1 verschoben werden. Um den Arbeitspunkt A1, A2, A3 manuell verstellen zu können, ist nach dem Stand der Technik jedoch ein tiefgreifendes verfahrenstechnisches Knowhow vonnöten. Um die verschiedenen Prozessgrößen zur Einstellung des Arbeitspunktes A1, A2, A3 beeinflussen zu können, muss an "anderen Schrauben" gedreht werden - z.B. an diversen Ventilen, Motoren für den Druck etc. Gerade bei der Optimierung von Reglern und der Kontrolle beim manuellen Fahren verfahrenstechnischer Anlagenteile zur Einstellung des optimalen Arbeitspunktes A1, A2, A3 ist es dabei wichtig, die Zusammenhänge zwischen den 2-Tupel Prozessmesswerten, den beeinflussenden Messstellen und sonstigen Metadaten der 2-Tupel Prozessmesswerte zu kennen, um die Arbeitspunkte A1, A2, A3 effizient und fehlerfrei in einen optimalen Arbeitsbereich legen zu können.

In der EP 2 458 464 A1 ist ein Verfahren zum Visualisieren eines zu steuernden technischen Prozesses offenbart.

Die DE 10 2018 124 303 A1 offenbart eine Bedieneranzeige eines Prozessabschnittes in einer Produktionsanlage.

In der US 2014/081430 A1 ist eine Arbeitsstation zum Bedienen und Beobachten eines industriellen Prozesses offenbart.

Der Erfindung liegt die Aufgabe zugrunde, ein Leitsystem für eine technische Anlage anzugeben, welches eine Optimierung eines Arbeitspunktes der technischen Anlage durch einen Operator der technischen Anlage vereinfacht und effizienter gestaltet.

Die zuvor formulierte Aufgabe wird durch ein Leitsystem einer technischen Anlage mit den Merkmalen des Anspruchs 1 gelöst. Das Leitsystem weist wenigstens einen Operator Station Server und einen Operator Station Client auf, wobei der Operator Station Server einen Visualisierungsdienst zur Ausgabe von Bildinformationen an den Operator Station Client aufweist. In dem Operator Station Server sind wenigstens zwei Objektmodelle von den Objektmodellen jeweils zugrunde liegenden technischen Objekten der technischen Anlage hinterlegt. Der Operator Station Server ist dazu ausgebildet, aus einem ersten, zu dem ersten technischen Objekt gehörigen Messwert und einem zweiten, zu dem zweiten technischen Objekt gehörigen Messwert ein XY-Trenddiagramm mit einem in dem XY-Trenddiagramm visualisierten Arbeitspunkt zu erzeugen. Zudem ist der Operator Station Server dazu ausgebildet, das XY-Trenddiagramm mit dem Arbeitspunkt mittels des Visualisierungsdienstes an den Operator Station Client zu übertragen.

Das erfindungsgemäße Leitsystem ist dadurch gekennzeichnet, dass der Arbeitspunkt eine Referenz auf wenigstens eines der wenigstens zwei Objektmodelle aufweist, wobei der Arbeitspunkt durch das dem referenzierten Objektmodell zugrunde liegende technische Objekt beeinflussbar ist.

Zudem ist das erfindungsgemäße Leitsystem dadurch gekennzeichnet, dass einem Bediener (Operator) des Operator Station Clients bei einer Anwahl des Arbeitspunkts in dem XY-Trenddiagramm mittels des Visualisierungsdienstes das wenigstens eine referenzierte Objektmodell visuell dargeboten wird.

Dem Operator des Operator Station Clients wird für den Fall, dass er eine grafische Verschiebung des Arbeitspunkts in einer X- oder Y-Richtung innerhalb des XY-Trenddiagramms vornimmt, nur dasjenige Objektmodell eines zugrunde liegenden technischen Objekts visuell dargeboten, das eine Verschiebung des Arbeitspunkts in der spezifischen X- oder Y-Richtung bewirkt. Es wird nur das (oder die) Objektmodell dem Operator visuell dargeboten, welches eine Verschiebung des Arbeitspunktes innerhalb des XY-Trenddiagramms in einer der beiden spezifischen Richtungen bewirkt.

Erfindungsgemäß sind innovierte XY-Trenddiagramme um referenzierte Objektmodelle von zugrunde liegenden technischen Objekten erweitert, wobei die Objektmodelle zu einer Laufzeit der technischen Anlage durch den Operatoren interaktiv bei der Optimierung des Arbeitspunkts abgerufen werden können. Diese Erweiterung kann beispielsweise bei einer Projektierung der technischen Anlage (dem sogenannten "Engineering") erfolgt sein.

Der Operator weiß bei dem Einsatz des erfindungsgemäßen Leitsystems (ohne tiefergehende Kenntnisse der technischen Anlage haben zu müssen) unmittelbar, welche technischen Objekte im Zusammenhang mit einer Optimierung (Verschiebung) des Arbeitspunktes in dem XY-Trenddiagramm liegen, so dass er gezielt an diesen "Stellrädern" drehen kann. Ein Betrieb der technischen Anlage ist damit deutlich effizienter als bislang bekannt.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozessnahe Komponenten, die zur Ansteuerung der Aktoren bzw. Sensoren dienen. Darüber hinaus weist das Leitsystem u.a. Mittel zur Visualisierung der Prozessanlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern (sogenannten Operatoren) zur Verfügung stellt. Der Operator Station Server stellt in der Regel eine Kommunikationsverbindung zu Automatisierungssystemen der technischen Anlage her und gibt Daten der technischen Anlage an den sogenannten Operator Station Client weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen. Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der technischen Anlage. Hierzu kann der Operator ein Bedien- und Beobachtungssystem (den Operator Station Client in Verbindung mit dem Operator Station Server) des Leitsystems nutzen.

Unter einem technischen Objekt wird eine abgeschlossene technische Einheit verstanden, die in eine übergeordnete Steuerungsebene integrierbar ist. Ein solches technisches Objekt kann zum Beispiel ein Zusammenschluss mehrerer Messstellen oder ein größerer Anlagenteil einer industriellen Anlage sein. Das technische Objekt muss aber nicht dem Feld der Industrieanlagen entstammen, sondern kann beispielsweise auch ein Motormodul eines Automobils, eines Schiffs oder dergleichen sein.

In dem Operator Station Server ist eine computerimplementierte Repräsentation der wenigstens zwei technischen Objekte hinterlegt, die sogenannten Objektmodelle. Über diese Objektmodelle können Messwerte der den Objektmodellen jeweils zugrunde liegenden technischen Objekte abgerufen und weiterverarbeitet werden. Es kann vorkommen, dass mehrere Objektmodelle in dem XY-Trenddiagramm referenziert sind, da sie alle einen Einfluss auf den Arbeitspunkt haben und einen ähnlichen (oder den gleichen) technischen Effekt bewirken.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

Es zeigen:
- FIG 1: ein XY-Trenddiagramm gemäß dem Stand der Technik;
- FIG 2: ein XY-Trenddiagramm mit einem ersten Aspekt;
- FIG 3: ein XY-Trenddiagramm mit einem zweiten Aspekt; und
- FIG 4: eine schematische Zeichnung eines Teils eines erfindungsgemäßen Leitsystems.

FIG 2 zeigt im Wesentlichen dasselbe XY-Trenddiagramm wie FIG 1. Zusätzlich ist in dem XY-Trenddiagramm 1 eine Referenz auf ein Objektmodell 3 hinterlegt, das einem Operator einer technischen Anlage, welcher das XY-Trenddiagramm bedient und beobachtet, visuell dargeboten wird. Der zuletzt gewählte Arbeitspunkt A3 liegt etwas unterhalb des optimalen Arbeitspunktes, welcher mit einem Pfeil 4 in FIG 2 angezeigt wird. Wählt der Operator nun diesen optimalen Arbeitspunkt, beispielsweise durch ein Klicken mit einem Mauscursor auf diese Stelle des XY-Trenddiagramms 1, so wird dem Operator das in dem XY-Trenddiagramm 1 referenzierte und logisch korrelierte Objektmodell 3 visuell in Form eines sogenannten Faceplates dargeboten. Dabei handelt es sich bei dem Objektmodell 3 um dasjenige, dessen zugrunde liegendes technisches Objekt manipuliert werden muss, um den Arbeitspunkt zur gewünschten Position in Richtung der gewählten Position innerhalb des XY-Trenddiagramms 1 zu bewegen. Im vorliegenden Beispiel handelt es sich um das Faceplate eines als Ventilregler ausgebildeten technischen Objekts, mittels welchem ein Druckwert 5 entsprechend eingestellt werden kann.

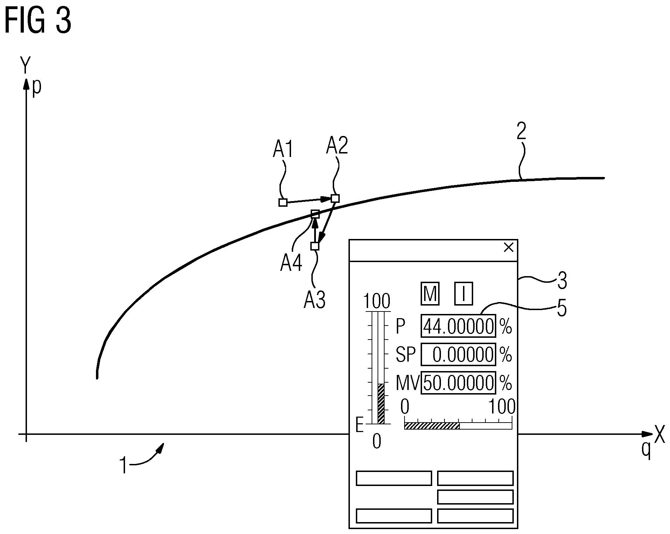

In FIG 3 ist dargestellt, wie der neue Arbeitspunkt A4 durch die Modifizierung des passenden Objektmodells 3 in einen optimalen Bereich gebracht werden konnte.

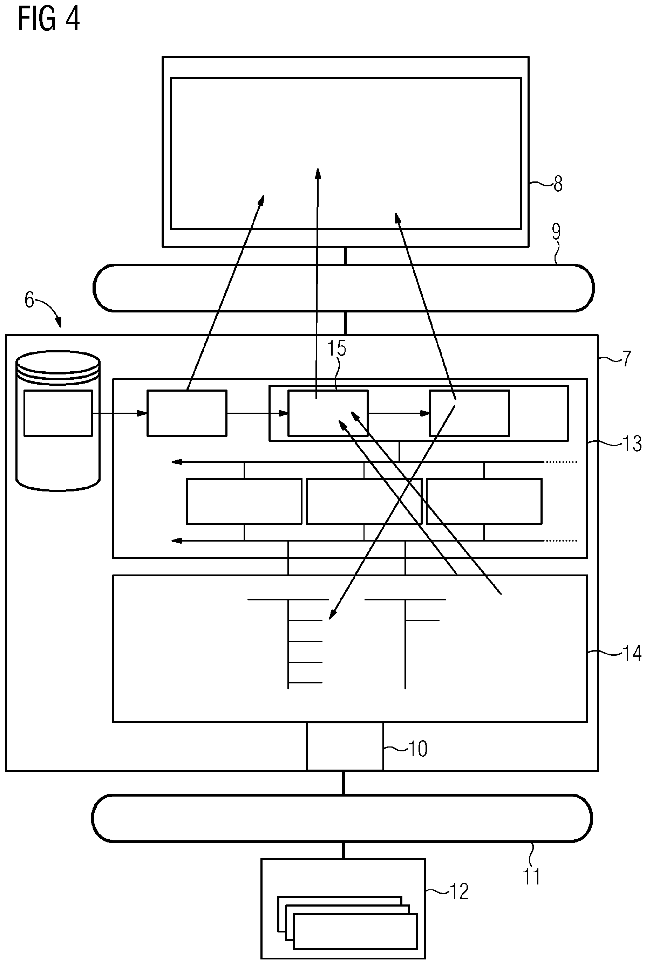

In FIG 4 ist ein Teil eines erfindungsgemäßen Leitsystems 6 einer Prozessanlage dargestellt. Das Leitsystem 6 umfasst einen Server eines Bediensystems bzw. einen Operator Station Server 7 und einen dazugehörigen Operator Station Client 8. Der Operator Station Server 7 und der Operator Station Client 8 sind über einen Terminalbus 9 miteinander und mit nicht dargestellten weiteren Komponenten des Leitsystems 7 wie einem Engineering System Server oder einem Prozessdatenarchiv verbunden.

Ein Benutzer bzw. Operator hat mittels des Operator Station Clients 8 mittels des Terminalbus 9 im Kontext eines Bedienens und Beobachtens Zugriff auf den Operator Station Server 7. Der Terminalbus 9 kann, ohne sich darauf zu beschränken, beispielsweise als Industrial Ethernet ausgebildet sein.

Der Operator Station Server 7 weist eine Geräteschnittstelle 10 auf, die mit einem Anlagenbus 11 verbunden ist. Hierüber kann der Operator System Server 7 mit einem Automatisierungsgerät 12 des Leitsystems 6 kommunizieren. Der Anlagenbus 11 kann, ohne sich darauf zu beschränken, beispielsweise als Industrial Ethernet ausgebildet sein. Das Automatisierungsgerät 12 kann wiederum mit einer beliebigen Anzahl an Subsystemen (nicht dargestellt) verbunden sein.

In dem Operator Station Server 7 ist ein Visualisierungsdienst 13 integriert, über den eine Übertragung von (Visualisierungs-)Daten an den Operator Station Client 8 erfolgen kann. Zudem weist der Operator Station Server 7 ein Prozessabbild (Process Image) 14 der Prozessanlage auf. Anlagenbilder, die die innovierten XY-Trenddiagramme 1 aufweisen, werden mittels des Visualisierungsdienstes 14 auf dem Operator Station Client 8 visualisiert. Möchte nun der Operator den Arbeitspunkt A1, A2, A3, A4 in eine bestimmte Richtung innerhalb des XY-Trenddiagramms 1 optimieren, wertet ein Trenddienst 15 des Operator Station Servers 7 die entsprechenden logisch in dem XY-Trenddiagramm 1 referenzierten Objektmodelle 3 aus und lässt das Faceplate des betreffenden Objektmodells 3 im Operator Station Client 8 visualisierten Anlagenbild für die Arbeitspunktoptimierung visuell darstellen.

## Patentansprüche

1. Leitsystem (6) einer technischen Anlage, welches wenigstens einen Operator Station Server (7) und einen Operator Station Client (8) aufweist,
welcher Operator Station Server (7) einen Visualisierungsdienst (13) zur Ausgabe von Bildinformationen an den Operator Station Client (8) aufweist,
und in welchem Operator Station Server (7) wenigstens zwei Objektmodelle (3) von den Objektmodellen (3) zugrunde liegenden technischen Objekten der technischen Anlage hinterlegt ist,
und wobei der Operator Station Server (7) dazu ausgebildet ist, aus einem ersten, zu dem ersten technischen Objekt gehörigen Messwert und einem zweiten, zu dem zweiten technischen Objekt gehörigen Messwert ein XY-Trenddiagramm (1) mit einem in dem XY-Trenddiagramm (1) visualisierten Arbeitspunkt (A1, A2, A3, A4) zu erzeugen,
und dazu ausgebildet ist, das XY-Trenddiagramm (1) mit dem Arbeitspunkt (A1, A2, A3, A4) mittels des Visualisierungsdienstes (13) an den Operator Station Client (8) zu übertragen,
**dadurch gekennzeichnet, dass**
das XY-Trenddiagramm (1) und/oder der Arbeitspunkt (A1, A2, A3, A4) eine Referenz auf wenigstens eines der Objektmodelle (3) aufweist, wobei der Arbeitspunkt (A1, A2, A3, A4) durch das dem referenzierten Objektmodell (3) zugrunde liegende technische Objekt beeinflussbar ist,
und dass einem Operator des Operator Station Clients (8) bei einer Anwahl des Arbeitspunkts (A1, A2, A3, A4) in dem XY-Trenddiagramm (1) mittels des Visualisierungsdienstes (13) das wenigstens eine referenzierte Objektmodell (3) visuell dargeboten wird,
wobei dem Operator des Operator Station Clients (8) für den Fall, dass er eine grafische Verschiebung des Arbeitspunkts (A1, A2, A3, A4) in einer X- oder Y-Richtung innerhalb des XY-Trenddiagramms (1) vornimmt, nur dasjenige Objektmodell (3) eines zugrunde liegenden technischen Objekts visuell dargeboten wird, das eine Verschiebung des Arbeitspunkts (A1, A2, A3, A4) in der spezifischen X- oder Y-Richtung bewirkt.

## Claims

1. Control system (6) of a technical installation, which has at least one operator station server (7) and one operator station client (8),
which operator station server (7) has a visualisation service (13) for outputting image information to the operator station client (8),
and in which operator station server (7) at least two object models (3) of technical objects of the technical installation are stored, which technical objects underlie the object models (3),
and wherein the operator station server (7) is embodied to generate an XY trend diagram (1) with an operating point (A1, A2, A3, A4) visualised in the XY trend diagram (1) from a first measurement value associated with the first technical object and a second measurement value associated with the second technical object,
and is embodied to transmit the XY trend diagram (1) with the operating point (A1, A2, A3, A4) to the operator station client (8) by means of the visualisation service (13),
**characterised in that**
the XY trend diagram (1) and/or the operating point (A1, A2, A3, A4) has a reference to at least one of the object models (3), wherein the operating point (A1, A2, A3, A4) can be influenced by the technical object underlying the referenced object model (3),
and that an operator of the operator station client (8) is visually presented with the at least one referenced object model (3) by means of the visualisation service (13) when selecting the operating point (A1, A2, A3, A4) in the XY trend diagram (1),
wherein the operator of the operator station client (8), in the event that he performs a graphical shifting of the operating point (A1, A2, A3, A4) in an X- or Y-direction within the XY trend diagram (1), is only visually presented with the object model (3) of an underlying technical object, which object model (3) brings about a shifting of the operating point (A1, A2, A3, A4) in the specific X- or Y-direction.

## Revendications

1. Système (6) de guidage d'une installation technique, qui a au moins un opérateur station serveur (7) et un opérateur station client (8),
lequel opérateur station serveur (7) a un service (13) de visualisation pour donner des informations d'image à l'opérateur station client (8),
et dans lequel opérateur station serveur (7) il est mis en mémoire au moins deux modèles (3) des objets techniques de l'installation technique, à la base des modèles (3) d'objet,
et dans lequel l'opérateur station serveur (7) est constitué pour produire, à partir d'une première valeur de mesure appartenant au premier objet technique et d'une deuxième valeur de mesure appartenant au deuxième objet technique, un diagramme (1) de tendance XY ayant un point (A1, A2, A3, A4) de travail visualisé dans le diagramme (1) de tendance XY,
et est constitué pour transmettre à l'opérateur station client (8) le diagramme (1) de tendance XY ayant le point (A1, A2, A3, A4) de travail au moyen du service (13) de visualisation,
**caractérisé en ce que**
le diagramme (1) de tendance XY et/ou le point (A1, A2, A3, A4) de travail a une référence à au moins l'un des modèles (3) d'objet, le point (A1, A2, A3, A4) de travail pouvant être influencé par l'objet technique à la base du modèle (3) d'objet référencé,
et **en ce que** l'on offre visuellement le au moins un modèle (3) d'objet référencé à un opérateur de l'opérateur station client (8), lors d'un choix du point (A1, A2, A3, A4) de travail dans le diagramme (1) de tendance XY au moyen du service (13) de visualisation,
dans lequel on offre visuellement à l'opérateur de l'opérateur station client (8), pour le cas où il effectue un décalage graphique du point (A1, A2, A3, A4) de travail dans la direction X ou dans la direction Y au sein du diagramme (1) XY, seulement le modèle (3) d'objet d'un objet technique à la base, qui provoque un décalage du point (A1, A2, A3, A4) de travail dans la direction spécifique X ou Y.
